# EUROPEAN PATENT APPLICATION

(11) **EP 4 687 002 A1**
(43) Date of publication of application: **04.02.2026**
(21) Application number: 24192198.0
(22) Date of filing: 31.07.2024
(51) Int. Cl.: G05F 1/66, H02J 3/46

(54) **METHOD AND PROCESSING SYSTEM FOR DETERMINING SETTINGS FOR ELECTRIC POWER SYSTEM OPERATION**

(71) Applicant: Hitachi Energy Germany AG, 68309 Mannheim (DE)
(72) Inventor: Giuntoli, Marco, 64521 Groß-Gerau (DE); Biagini, Veronica, 85521 Ottobrunn (DE); Listmann, Kim, 64287 Darmstadt (DE)
(74) Representative: Meier, Florian

(57) **Abstract**

To determine settings for electric power system operation, at least one processing system (40) performs an optimal power flow processing (51) for a re-dispatch of an electric power system (20). The at least one processing system (40) further uses a data-driven processing technique (52) to adjust parameters of the optimal power flow processing (51) for the re-dispatch of the electric power system (20). The parameters may comprise optimal power flow constraints and/or a time horizon of the optimal power flow processing (51).

## Description

### TECHNICAL FIELD

Embodiments relate to methods, devices, and systems useful in association with electric power system operation. Embodiments of the invention relate in particular to such methods, devices, and systems that are operative to perform an optimal power flow (OPF) processing to determine settings such as generator unit commitment and setpoints of controllable loads.

### BACKGROUND

An electric power system is an important infrastructure component. The electric power system may comprise branches (such as power lines and/or cables), transformers, electric generators and other components or devices for power generation, power transmission and power distribution, and loads to be supplied with power.

When operating an electric power system, it is desirable that an operation state be set that is good or even optimal (e.g., in accordance with at least one cost function). Optimal Power Flow (OPF) is a technique that is useful to determine settings for electric power system operation. OPF may be or may comprise a nonlinear and/or non-convex optimization problem having various variables.

Decisions taken by transmission network operators for short-time operation are nowadays either supported by deterministic analytical approaches (i.e. security constrained dispatch) or even based on experience. This may result in settings for electric power system operation that are non-optimal or even poor in view of situations that may arise.

In view of a transition to more environmentally friendly technologies, electric power systems (such as electric power grids) experience a transformation driven by e.g. an increased political and social attention on environmental considerations. For example, there exists a trend towards an increased penetration of renewable energy sources, posing technical challenges for transmission and distribution network operators as well as utilities. Because of this trend, there exists a risk that legacy approaches for short- or mid-term operation will no longer be able to deal with the increasing complexity of the electric power system, considering the increased number of active components, unpredictable generation, e.g. if renewable energies are used, and forecasting errors. The challenges are exacerbated by the fact that maintaining a desired level of electric power system security is one of the most important aspects for operators. A criterion which is nowadays established and applies is the so called "N-1 security" criterion. Techniques that use a security constrained OPF (SC-OPF) exist, but add to the complexity and may not always be available for short- and/or mid-term ahead re-dispatch.

Thus, increasing power grid complexity and the need to attain a given security level make the determination of settings for electric power system operation more challenging.

US 11 907 865 B2 discloses a technique operative to determine a security-constrained optimal power flow (SC-OPF) of a power grid. Input data associated with a power grid scenario is obtained. The input data defines a security-constrained optimization problem (SC-OPF problem).
C. Maurer et al., "Dimensioning of secondary and tertiary control reserve by probabilistic methods". Euro. Trans. Electr. Power 2009; 19:544-552. DOI: 10.1002/etep.326 discloses techniques operable to determine and substantiate an amount of control reserve.
F. Bovera et al., "Data-Driven Evaluation of Secondary- and Tertiary-Reserve Needs with High Renewables Penetration: The Italian Case". Energies 2021, 14, 2157 presents a data-driven methodology to estimate secondary and tertiary reserve needs

There is still a need in the art for enhanced techniques for determining settings of an electric power system.

### SUMMARY

It is an objective of the invention to provide a method and a processing system operative to determine settings for an electric power system. It is in particular an objective to provide an enhanced method and processing system operative to determine settings for a re-dispatch of the electric power system, which are suitable to re-plan a secondary and/or tertiary operation reserve of the electric power system. It is an optional objective to provide such a method and processing system that do not require SC-OPF to be performed.

According to embodiments, a method, a processing system, and a machine-readable instruction code as recited in the independent claims are provided. The dependent claims define preferred or advantageous embodiments.

According to an aspect of the invention, there is provided a method of determining settings for electric power system operation. The method comprises determining, by the at least one processing system, parameters of an OPF processing for a re-dispatch of an electric power system, wherein determining the parameters comprises using a data-driven processing technique to determine the parameters. The method comprises performing, by the at least one processing system, the OPF processing for the re-dispatch of the electric power system.

Various effects and advantages are attained by the method. The method combines OPF techniques with a data-driven adjustment of parameters of the OPF, thereby adjusting the manner in which the OPF operates to process its input into a solution of the OPF problem. By using the data-driven technique to perform the adjustment, the OPF is performed in a manner that is determined based on objective criteria, that are set during training of the data-driven technique. The method makes it possible to reach a higher level of autonomy in the short- and/or mid-term scheduling. The method also makes it possible to ensure a desired security (or risk) level by means of the data-driven processing technique, obviating the need for performing SC-OPF. Thus, the data-driven processing technique can adjust the OPF processing such that the OPF processing determines settings for the power grid re-dispatch so as to minimize overall costs (i.e., minimizing a cost function) while maintaining an acceptable risk level.

The parameters may comprise at least one of OPF constraints and a time horizon of the OPF processing.

Thereby, the data-driven processing technique can adjust the OPF constraints and/or the time horizon of the OPF processing such that the OPF processing determines settings for the power grid re-dispatch so as to minimize overall costs (i.e., minimizing a cost function) while maintaining an acceptable risk level.

The data-driven processing technique may have an input that receives operational data.

Thereby, the data-driven processing technique can influence the OPF processing (e.g., the OPF constraints and/or the time horizon) in a manner that depends on an operational state of the electric power system.

The operational data may comprise operational data of the electric power system from a previous re-dispatch.

Thereby, the data-driven processing technique can influence the OPF processing (e.g., the OPF constraints and/or the time horizon) in a manner that depends on an operational state of the electric power system as set in the previous re-dispatch (e.g., the re-dispatch that immediately precedes the re-dispatch that is being performed based on the OPF processing). The operational data form the previous re-dispatch are readily available from, e.g., a data repository, such as a storage system of the processing system that determines the settings.

The operational data may comprise data dependent on an event that causes the re-dispatch to be performed.

Thereby, the data-driven processing technique can influence the OPF processing (e.g., the OPF constraints and/or the time horizon) in a manner that depends on at least one event that necessitates the re-dispatch, e.g., by necessitating a re-planning of secondary and/or tertiary operation reserve(s).

The operational data may be retrieved from a data repository. The method may further comprise updating, by the at least one processing system, data stored in the data repository responsive to the re-dispatch.

Thereby, operational data relating to the re-dispatch (such as generator unit commitment and/or setpoints for controllable loads) can be stored in the data repository for use in a subsequent re-dispatch.

The data-driven processing technique may determine both the OPF constraints and the time horizon.

Thereby, the data-driven processing technique can adjust the OPF constraints and the time horizon of the OPF processing such that the OPF processing determines settings for the power grid re-dispatch so as to minimize overall costs (i.e., minimizing a cost function) while maintaining an acceptable risk level.

The data-driven processing technique may comprise an artificial intelligence (Al) model.

Thereby, Al techniques can be used to determine how the OPF processing is to be adjusted in consideration of the operational state of the electric power system.

The AI model may have an input operative to receive the operational data. The operational data may comprise settings from the previous re-dispatch and data dependent on an event that causes the re-dispatch to be performed.

Thereby, the AI model can influence the OPF processing (e.g., the OPF constraints and/or the time horizon) in a manner that depends on both the previous re-dispatch and at least one event that necessitates the re-dispatch, e.g., by necessitating a re-planning of secondary and/or tertiary operation reserve(s).

The AI model may have an output operative to provide the OPF constraints and the time horizon of the OPF processing.

Thereby, the AI model can adjust the OPF constraints and/or the time horizon of the OPF processing such that the OPF processing determines settings for the power grid re-dispatch so as to minimize overall costs (i.e., minimizing a cost function) while maintaining an acceptable risk level.

The AI model may be or may comprise a machine learning (ML) model that is trained with an objective of minimizing re-dispatch costs while ensuring a pre-determined security level.

Thereby, the AI model can influence the OPF processing (e.g., the OPF constraints and/or the time horizon) in a manner that reduces the re-dispatch costs while ensuring the pre-determined security level.

The pre-determined security level may be configurable.

Thereby, the re-dispatch can be performed in dependence on the needs of the respective transmission system operator (TSO) and/or distribution system operator (DSO).

The OPF processing may be a non-security-constrained OPF processing.

Thereby, the time required to determine the settings for the re-dispatch is reduced. This makes the techniques particularly suitable for adapting the settings to re-plane (or adapt) a secondary operation reserve and/or a tertiary operation reserve of the electric power system operation.

The OPF processing may be performed to adapt a secondary operation reserve and/or a tertiary operation reserve of the electric power system operation.

Thereby, the OPF processing can be performed selectively responsive to changes (such as random events that are not plannable in advance) that necessitate an adaption of the secondary operation reserve and/or a tertiary operation reserve of the electric power system operation.

The method may further comprise verifying, by the at least one processing system, that an OPF trigger criterion is fulfilled and initiating the OPF processing responsive to the OPF trigger criterion.

Thereby, the OPF processing can be performed selectively to implement the re-dispatch responsive to the trigger criterion.

The electric power system may comprise branches (which may comprise lines and/or cables). The trigger criterion may be based on branch temperatures of the branches of the electric power system.

Thereby, the OPF processing can be performed selectively to implement the re-dispatch responsive to a trigger criterion that causes a deviation of the branch temperatures of branches as compared to expected values.

Alternatively or additionally, the method may further comprise performing, by the at least one processing system, a power flow (PF) processing, wherein the trigger criterion is based on results of the PF processing.

Thereby, the OPF processing can be performed selectively to implement the re-dispatch responsive to detecting, based on the PF processing, that a re-dispatch is warranted, e.g., to ensure that sufficient secondary and/or tertiary operation reserve is maintained.

The OPF processing may be operative to determine generator unit settings (such as generator unit commitment (GUC)) and/or controllable load settings (such as setpoints of controllable loads) in such a manner that costs, quantified by a cost function, are minimized. The cost function may be indicative of, or may depend on, both operational power consumption and security level.

Thereby, settings for controllable components of the electric power system are determined to perform the re-dispatch.

The settings may comprise the generator unit settings and/or the controllable load settings determined in the OPF processing.

Thereby, settings for controllable components of the electric power system are determined to perform the re-dispatch.

The method may further comprise initiating or enabling, by the processing system, the re-dispatch in accordance with OPF processing results of the OPF processing.

Thereby, the re-dispatch is performed in accordance with the settings determined using the OPF processing, which in turn is performed based on the data-driven processing technique.

The method may determine the settings for the re-dispatch, with the re-dispatch being an ahead re-dispatch. The ahead re-dispatch may bean ahead re-dispatch for a time horizon that is included in a range from at least 1 second to less than 1 day, or from at least 15 seconds to less than 2 hours.

Thereby, the method determines settings for electric power system re-dispatch over a time horizon for which conventional approaches based on deterministic logics and/or operator experience are prone to providing non-optimal results.

The method may determine the settings for a short-term re-dispatch. The short term may be at least one minute and less than one day.

Thereby, the method determines settings for electric power system re-dispatch over a time horizon for which conventional approaches based on deterministic logics and/or operator experience are prone to providing non-optimal results.

The electric power system may comprise a power transmission grid and/or a power distribution grid.

Thereby, the method determines settings for electric power system re-dispatch for electric power systems in which legacy techniques face particular challenges, in particular for short- and/or mid-term re-dispatch.

According to an aspect of the invention, there is provided a method of controlling an electric power system, comprising: performing the method of determining settings according to an aspect or embodiment, and performing (e.g., by the processing system or by a control system communicatively interfaced with the processing system) a re-dispatch of the electric power system.

Thereby, the method determines settings for electric power system re-dispatch and applies the settings to perform the electric power system re-dispatch.

The re-dispatch may be performed automatically.

Thereby, a higher degree of automation is attained to increase the security level and/or reduce costs (determined in accordance with a cost function).

The re-dispatch may be performed automatically to adjust secondary and/or tertiary operation reserve(s) of the electric power system.

Thereby, a higher degree of automation is attained to increase the security level and/or reduce costs (determined in accordance with a cost function).

The electric power system may comprise a power transmission grid and/or a power distribution grid.

Thereby, the method determines settings for electric power system re-dispatch for electric power systems in which legacy techniques face particular challenges, in particular for short- and/or mid-term re-dispatch.

According to an aspect, there is provided a method of providing the data-driven processing technique for use in the method of determining settings, wherein the method of providing the data-driven processing technique comprises training at least one ML model to generate the data-driven processing technique.

Thereby, the data-driven processing technique is generated in a data-driven manner, based on training data that may comprise historical and/or simulated operational data and associated historical and/or simulated settings for the electric power system operation.

The at least one ML model may have an input operative to receive the operational data and an output operative to provide both a time horizon over which OPF processing is performed and constraints of the OPF processing.

Thereby, the data-driven processing technique is generated for use in the method of determining settings for electric power system operation.

Additional optional features of the method of providing the data-driven processing technique and the effects attained thereby correspond to the features and effects discussed in association with the

According to an aspect of the invention, there is provided a machine-readable instruction code which, when executed by at least one processing circuit, causes the at least one processing circuit to perform the method according to an aspect or embodiment of the invention.

The effects attained by the machine-readable instruction code correspond to the effects disclosed in association with the methods and systems according to various embodiments.

According to an aspect of the invention, there is provided a non-transitory storage medium having stored thereon machine-readable instruction code which, when executed by at least one processing circuit, causes the at least one processing circuit to perform the method according to an aspect or embodiment of the invention.

The effects attained by the non-transitory storage medium correspond to the effects disclosed in association with the methods and systems according to various embodiments.

According to an aspect, there is provided a processing system for determining settings for electric power system operation. The processing system comprises at least one processing circuit operative to: determine parameters of an optimal power flow, OPF, processing for an re-dispatch of an electric power system, the parameters comprising at least one of OPF constraints and a time horizon of the OPF processing, the at least one processing circuit being operative to apply a data-driven processing technique to determine the parameters; and perform the OPF processing for the re-dispatch of the electric power system.

Various effects and advantages are attained by the processing system. The processing system is operative to combine OPF techniques with a data-driven adjustment of parameters of the OPF, thereby adjusting the manner in which the OPF operates to process its input into a solution of the OPF problem. By using the data-driven technique to perform the adjustment, the OPF is performed in a manner that is determined based on objective criteria, that are set during training of the data-driven technique. The processing system makes it possible to reach a higher level of autonomy in the short- and/or mid-term scheduling. The processing system also makes it possible to ensure a desired security (or risk) level by means of the data-driven processing technique, obviating the need for performing SC-OPF. Thus, the data-driven processing technique can adjust the OPF processing such that the OPF processing determines settings for the power grid re-dispatch so as to minimize overall costs (i.e., minimizing a cost function) while maintaining an acceptable risk level.

The parameters may comprise at least one of OPF constraints and a time horizon of the OPF processing.

Thereby, the processing system is operative such that the data-driven processing technique can adjust the OPF constraints and/or the time horizon of the OPF processing such that the OPF processing determines settings for the power grid re-dispatch so as to minimize overall costs (i.e., minimizing a cost function) while maintaining an acceptable risk level.

Optional features of the processing system according to various embodiments and the effects attained thereby correspond to the optional features and effects discussed in association with the methods according to embodiments.

The processing system may be operative to perform the method according to any aspect or embodiment disclosed herein.

According to an aspect, there is provided an electric power system control system, comprising the processing system according to an aspect or embodiment, wherein the electric power system control system is operative to implement the re-dispatch based on OPF processing results of the OPF processing.

Thereby, the control system determines the settings for electric power system re-dispatch and applies the settings to perform the electric power system re-dispatch.

The control system may be operative to automatically implement the re-dispatch, e.g., to ensure that secondary and/or tertiary operation reserves are provided.

Thereby, a higher degree of automation is attained, increasing the security by reducing the risk of human error.

According to an aspect, there is provided a system, comprising an electric power transmission system (e.g., a transmission grid) and/or an electric power distribution system (e.g., a distribution grid), and the processing system and/or the control system. The processing system is operative to determine settings for the re-dispatch of the electric power system.

Thereby, the OPF processing performed in a manner determined by the data-driven processing technique (i.e., over a time horizon and/or with OPF constraints determined by the data-driven processing technique) is used to implement the re-dispatch of the electric power system.

Embodiments of the invention provide enhanced techniques for electric power system re-dispatch. Embodiments of the invention are operative to determine settings for the re-dispatch, e.g., to ensure that secondary and/or tertiary operation reserves are maintained.

### BRIEF DESCRIPTION OF THE DRAWINGS

Embodiments of the invention will be described with reference to the drawings in which similar or identical reference signs designate elements with similar or identical configuration and/or function.
Fig. 1 is a schematic representation of a system comprising a processing system.
Fig. 2 is a schematic block diagram representation of the processing system.
Fig. 3 is a flow chart of a method of determining settings for electric power system operation.
Fig. 4 is a flow chart of a method of determining settings for electric power system operation.
Fig. 5 is a schematic representation of a data-driven processing technique.
Fig. 6 is a schematic representation of operation reserves and their associated time horizon.
Fig. 7 is a flow chart of a method of providing a data-driven processing technique for use by the processing system.
Fig. 8 shows a flow chart of a method of determining settings for electric power system operation in association with data flow(s).
Fig. 9 is a schematic representation of a system comprising the processing system.
Fig. 10 is a schematic representation of a system comprising the processing system.

### DETAILED DESCRIPTION OF EMBODIMENTS

Embodiments of the invention will be described with reference to the drawings. In the drawings, similar or identical reference signs designate elements with similar or identical configuration and/or function.

As used herein, the term "electric power system" encompasses power distribution systems, power transmission systems, power generation systems, and/or controllable loads. The electric power system may in particular comprise a power transmission grid and/or a power distribution grid.

As used herein, the term "data-driven processing technique" encompasses Al and/or ML models, without being limited thereto.

As used herein, the term "ahead re-dispatch" encompasses a short- and/or mid-term ahead re-dispatch of the electric power system. Examples include a 15 minutes ahead re-dispatch, a 1 hour ahead re-dispatch, without being limited thereto.

As used herein, the term "settings" for electric power system operation encompass settings for generator units, such as generator unit commitment (GUC) and/or other generator setpoints, settings for controllable loads, such as setpoints for controllable loads, and/or settings for energy storage systems (ESS).

As used herein, the term "reserve" refers to a reserve to be maintained by a TSO and/or DSO to guarantee reliable grid operation. Different types of reserve are distinguished by their characteristic time period. For illustration, as used herein, a "secondary operation reserve" encompasses an operation reserve that is available within five minutes after an energy shortfall and that is disposable again after 15 minutes after the energy shortfall. As used herein, a "tertiary operation reserve" encompasses an operation reserve that must be completely activatable within 15 minutes after the energy shortfall. The terms "secondary operation reserve" and "tertiary operation reserve", as used herein, may correspond to the "secondary control reserve" and the "tertiary control reserve" in accordance with, e.g., the UCTE Operation Handbook available at www.ucte.org (e.g., in accordance with the UCTE Operation Handbook, Part G, Glossary, v2.2/20.07.04).

As used herein, "OPF" refers to a technique that comprises several PF computations to determine settings that are "optimum" in the sense that they minimize (or sometimes also maximize) a cost function.

As used herein, "costs" or a "cost function" refers to a cost function that represents optimality in the OPF. The "costs" or "cost function" may be dependent on, or may reflect, operational power (e.g., power losses for the respective operational state) and/or the security or risk level associated with the respective settings. Thus, the "costs" or "cost function" do not need to (and generally do not) represent monetary costs. The terms "costs" or "cost function" are used in the context of optimization techniques, with "target function" or "objective function" often being used synonymously for "cost function."

As used herein, a "time horizon" for the OPF processing refers to the time horizon considered by the OPF processing. This time horizon is different from (and later than) the time period in which the OPF processing is executed.

As used herein, the term "determination" or "determine" encompasses an approximate determination.

Methods and processing systems according to embodiments are operative to apply a data-driven processing system to dynamically change constraints for an OPF processing and the time horizon over which the OPF processing is performed for the ahead re-dispatch. The data-driven processing technique can adjust the OPF processing such that the settings determined by the OPF processing attain the following overall goal: minimizing the overall costs for short term operations (as determined in accordance with the cost function of the OPF processing) while maintaining at the same time an acceptable, risk (or safety) level for the electric power system.

Thus, the method and processing system are operative to reduce the operational power for electric power system operation (e.g., when re-planning of the secondary and/or tertiary operation reserve is required) and/or allowing a higher level of security to be maintained in the system.

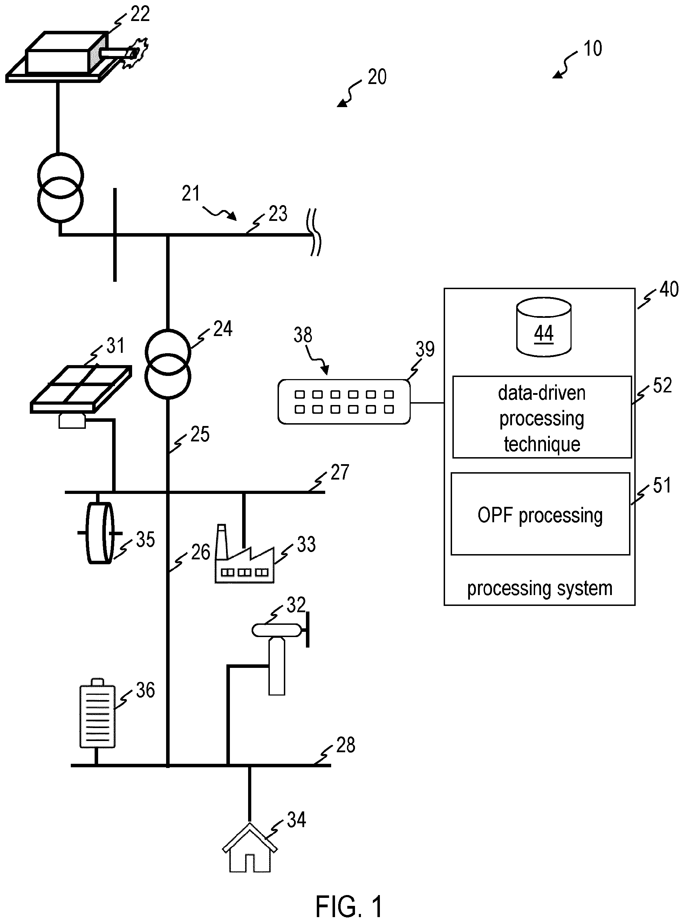

Fig. 1 shows a schematic representation of a system 10. The system 10 comprises an electric power system comprising an electric power system 20. The electric power system 20 comprises a power transmission system 21 and/or power distribution system. The system 10 comprises a processing system 40 operative as described in detail herein. The processing system 40 is operative to determine settings (such as generator unit commitment(s) and/or controllable load setpoint(s) and/or ESS setpoint(s)) for a re-dispatch of the electric power system 20.

The electric power system 20 comprises one or several generators 22, the power transmission system 21 comprising a transmission line 23 or a transmission cable 23, and one or several power distribution system(s). The power distribution system(s) is/are coupled to, e.g., the power transmission system 21 via one or several transformer(s) 24 that are operative to reduce voltage from a first voltage at the transmission level to lower second voltages at buses 27, 28 at the distribution level. The power distribution system(s) comprise a plurality of lines 25, 26 and a plurality of buses 27, 28. Loads 33, 34 and generators 31, 32 may be connected to at least some of the distribution level buses by means of suitable coupling gear, such as feeders. ESSs, such as battery ESSs 36 and/or kinetic energy ESSs 35 may be connected to at least some of the distribution level buses by means of suitable coupling gear, such as feeders.

The processing system 40 is operative to determine settings for the electric power system, e.g., by determining a generator unit commitment for the generator(s) 22. The processing system 40 is operative to perform an OPF processing 51 to determine settings that are optimal in the sense that they extremize a cost function of the OPF processing. The OPF processing 51 may perform a constrained optimization to determine the settings. Importantly, the processing system 40 is operative to invoke a data-driven processing technique 52 that dynamically adjusts OPF constraints of the OPF processing 51 and/or a time horizon over which the OPF processing 51 is performed, i.e., the time horizon considered in the optimization process of the OPF processing 51. The OPF processing 51 may be a non-SC-OPF. A desired security or risk level is ensured by the dynamic adjustments determined by the data-driven processing technique 52, obviating the need for SC-OPF.

The data-driven processing technique 52 may be operative to adjust the OPF processing 51 (e.g., by adjusting the OPF constraints and/or the time horizon) based on operational data of the electric power system 20. The data-driven processing technique 52 may receive, at its input, the operational data, with the operational data comprising settings for generators, loads, and/or ESSs from a previous re-dispatch and data relating to an event that necessitates the re-dispatch. These operational data, that are used to generate the input (e.g., the input vector) of the data-driven processing technique 52, may be stored in a data repository 44. The data repository may be a storage system of the processing system 40 or accessible by the processing system 40. The OPF processing 51 may also be operative to perform its optimization using the operational data stored in the data repository 44, with the OPF processing 51 (i.e., the manner in which the input to the OPF processing is processed to attain the settings) being adapted based on the data-driven processing technique 52 output.

The processing system 40 may be integrated in a control system (e.g., a regional and/or national control center) of the electric power system 20. The processing system 40 may be operative to communicatively interface with generator units, loads, and/or ESS via a communication system 38, which may comprise a communication switch 39, to apply the determined settings for performing the re-dispatch, e.g., as a short- or mid-term ahead re-dispatch.

The processing system 40 may be separate from a control system (e.g., a regional and/or national control center) of the electric power system 20. The processing system 40 may be operative to communicatively interface with the control system via the communication system 38, to enable the control system to apply the determined settings for performing the re-dispatch, e.g., as a short- or mid-term ahead re-dispatch.

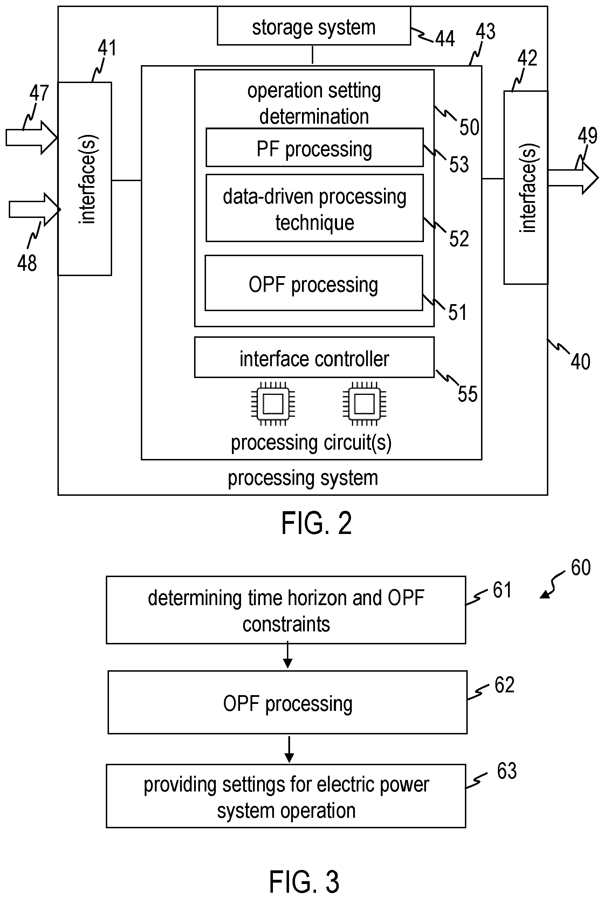

Fig. 2 is a schematic block diagram representation of the processing system 40. The processing system 40 comprises at least one interface 41, 42. The processing system 40 is operative to receive event-related data 47 on at least one random event (i.e., an event that is not pre-planned) via the at least one interface 41. The processing system 40 may be operative to receive other system-related data, such as measurements 48 and/or messages from a secondary system of the electric power system, which are indicative of the operational state of the processing system.

The processing system 40 comprises the storage system 44. The storage system 44 is operative to store the operational data relating to the electric power system and/or the event-related data 47. The storage system 44 may also store operational data that comprise settings (e.g., setpoints) determined during one or several previous re-dispatches.

The processing system 40 comprises at least one processing circuit 43 operative to process the operational data to determine settings for an electric power system, such as the electric power system of Fig. 1. The processing system 40 is operative to perform an operation setting determination 50 to determine the settings for a re-dispatch. The operation setting determination 50 may comprise a PF processing 53, the OPF processing 51, and the data-driven processing technique 52.

The processing system 40 may be operative to perform the PF processing 53. The PF processing 53 may be used to determine the settings for the electric power system in the absence of an event that require re-planning of the secondary and/or tertiary operation reserve. The PF processing 53 may be used to determine the settings for the electric power system as long as branch temperatures of the electric power system do not deviate from their expected values (which may be determined based on a comparison of measurements and modeled branch temperatures). Alternatively or additionally, the PF processing 53 may be used to determine the settings for the electric power system until the processing system 40 detects an inconsistency between reported operational data and the results of the PF processing 53.

The processing system 40 may be operative to perform the OPF processing 51 to determine settings for a re-dispatch (e.g., a short- or mid-term ahead re-dispatch) of the electric power system, e.g., when an event requires re-planning of the secondary and/or tertiary operation reserve. The OPF processing 51 may be used to determine the settings for the electric power system re-dispatch responsive to branch temperatures of the electric power system deviating from their expected values (which may be determined based on a comparison of measurements and modeled branch temperatures). Alternatively or additionally, the OPF processing 51 may be used to determine the settings for the electric power system when the processing system 40 detects an inconsistency between reported operational data and the results of the PF processing 53.

The processing system 40 may be operative such that the data-driven processing technique 52 processes, responsive to an OPF trigger criterion being fulfilled, operational data of the electric power system (which may stem from a previous re-dispatch) and the event data to thereby adapt the OPF processing 51 in dependence on the electric power system state. The processing system 40 may be operative such that OPF constraints and/or a time horizon considered in the OPF processing 51 is dependent on an output of the data-driven processing technique 51.

The OPF processing 51 may comprise any one or any combination of techniques, which may include one, several, or all of the following:
- Linear Programming: Linear programming can be used to solve the optimization problems associated with optimal power flow in electric power systems. This approach involves defining the objective function, constraints, and decision variables in a linear form, which can then be solved using optimization techniques.
- Non-linear Programming: Non-linear programming techniques, such as gradient-based methods, can be used to solve more complex optimal power flow problems that involve non-linear constraints and objective functions. These techniques are more computationally intensive than linear programming, but can provide more accurate solutions for OPF problems.
- Interior Point Methods: Interior point methods are a class of optimization techniques that can be used to solve OPF problems efficiently. These methods involve iteratively moving towards the optimal solution by solving a sequence of primal-dual interior point subproblems.
- Genetic Techniques: Genetic techniques are a type of metaheuristic optimization technique that can be used to solve OPF problems. These techniques mimic the process of natural selection and evolution to search for the optimal solution to a given problem.
- Particle Swarm Optimization: Particle swarm optimization is another metaheuristic optimization technique that can be used to solve OPF problems. This technique involves iteratively updating a population of candidate solutions based on their fitness and position in the search space.
- Dynamic Programming: Dynamic programming can be used to solve dynamic optimal power flow problems, where the objective function and constraints change over time. This approach involves recursively solving subproblems to find the optimal solution at each time step.
- Mixed Integer Linear Programming: Mixed integer linear programming can be used to solve OPF problems that involve discrete decision variables, such as switching operations in distribution systems. This approach involves formulating the problem as a mixed integer linear program and solving it using optimization techniques that can handle integer variables.

To perform the mentioned operations, the at least one processing circuit 43 may comprise any one or any combination of integrated circuits, integrated semiconductor circuits, processors, controllers, graphics processing units (GPUs), tensor processing units (TPUs), central processing units (CPUs), application specific integrated circuits (ASICs), field programmable gate arrays (FPGAs), circuit(s) including quantum bits (qubits) and/or quantum gates, without being limited thereto.

Fig. 3 is a flow chart of a method 60. The method 60 may be performed automatically by or using the processing system 40. The method 60 may be performed for a re-dispatch of an electric power system.

At process block 61, the data-driven processing technique 52 is used to determine a time horizon over which OPF processing is to be performed and/or OPF constraints considered in the OPF processing. Process block 61 may comprise receiving, by the data-driven processing technique 52, input that is based on both settings for the electric power system determined in a previous (e.g., an immediately preceding) re-dispatch and data related to an event that triggers the re-dispatch. Process block 61 may comprise providing, by the data-driven processing technique 52, output that comprises both the time horizon over which OPF processing is to be performed and/or OPF constraints or adjustments to OPF constraints considered in the OPF processing.

At process block 62, the OPF processing is performed. The OPF processing may use the settings for the electric power system determined in a previous (e.g., an immediately preceding) re-dispatch as starting point of the OPF processing. The OPF processing may be dependent on the output of the data-driven processing technique such that the optimal solution found by the OPF processing is dependent on the output of the data-driven processing technique. Process block 62 may comprise determining settings (such as GUCs, controllable load setpoints, and/or ESS setpoints) for which a cost function of the OPF processing is minimized.

At process block 63, the determined settings are provided or used for a re-dispatch of the electric power system. The re-dispatch may be a re-dispatch that changes secondary and/or tertiary operation reserve(s).

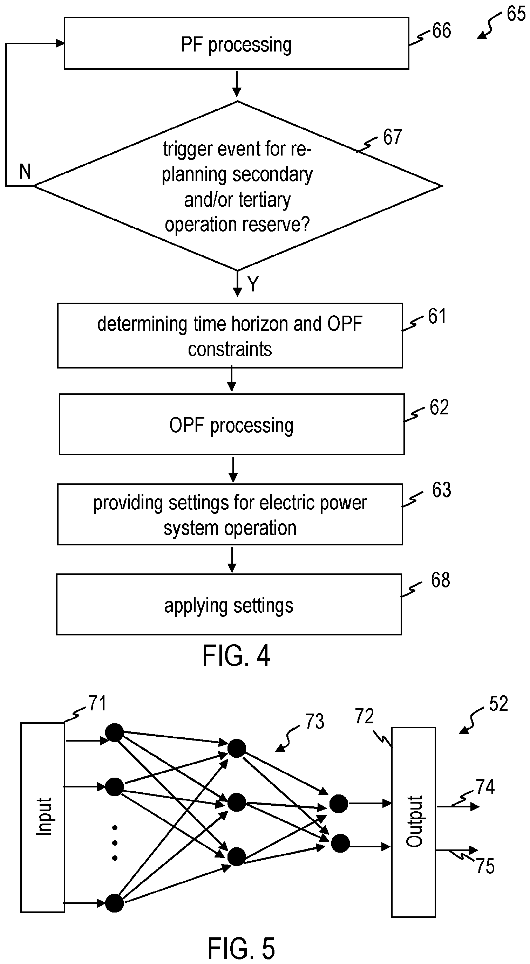

Fig. 4 is a flow chart of a method 65. The method 65 may be performed automatically by or using the processing system 40 or the system 10 comprising the processing system 40.

At process block 66, PF processing is performed.

At process block 67, it is determined whether an OPF trigger criterion for triggering OPF processing is fulfilled. Process block 67 may comprise determining whether an event requires re-planning of the secondary and/or tertiary operation reserve. Process block 67 may comprise determining whether branch temperatures of the electric power system deviating from their expected values (which may be determined based on a comparison of measurements and modeled branch temperatures). Alternatively or additionally, process block 67 may comprise determining whether there is an inconsistency between reported operational data and the results of the PF processing from process block 66. If the OPF trigger criterion is not fulfilled, the PF processing is continued at process block 66. If the OPF trigger criterion is fulfilled, the method proceeds to process block 61.

Process blocks 61, 62, and 63 may be implemented as described with reference to Fig. 3.

At process block 68, the settings determined by the OPF processing are applied for an ahead re-dispatch of the electric power system. Process block 68 may comprise storing the settings determined by the OPF processing, which is performed based on the data-driven processing technique output, in the data repository, e.g., the storage system 44 for use in a subsequent re-dispatch.

Fig. 5 is a schematic representation of a data-driven processing technique 52 that comprises or is implemented as an AI model, in particular as an ML model. The AI model or ML model comprises an input 71, an output 72, and may comprise one or several hidden layers 73 (in particular when implemented as a neural network (NN)).

The input 71 may be operative to receive input data, e.g. an input vector. The input data may comprise or may otherwise be based on settings for the electric power system determined in a previous re-dispatch. The input data may comprise or may otherwise be based on data dependent on an event that necessitates the re-dispatch.

The AI model or ML model may be operative such that the output 72 provides the time horizon 74 over which the OPF processing is to perform its optimization and OPF constraints 75 to be used in the OPF processing.

Thus, the AI model or ML model is operative to determine how the OPF processing is to be adjusted, considering the operational state of the electric power system.

The AI model or ML model may have any one of a variety of configurations, such as any one, several, or all of:
- Convolutional Neural Networks (CNNs): CNNs are operative to automatically and adaptively learn hierarchies of features from input data. This is suitable for the electric power system use cases considered herein.
- Recurrent Neural Networks (RNNs): RNNs are operative to retain memory of previous inputs through recurrent connections. This is suitable for the electric power system use cases considered herein.
- Generative Adversarial Networks (GANs): GANs are a class of neural networks that are trained in a competitive setting to generate realistic data samples, such as realistic operation data. GANs comprise a generator and a discriminator network that are trained simultaneously. This is suitable for the electric power system use cases considered herein.
- Transformer Networks: Transformer networks rely on self-attention mechanisms to capture long-range dependencies in the input sequences. This is suitable for the electric power system use cases considered herein.

The method and processing system according to various embodiments are particularly suitable for a re-dispatch performed to modify the secondary and/or tertiary operation reserve, without being limited thereto.

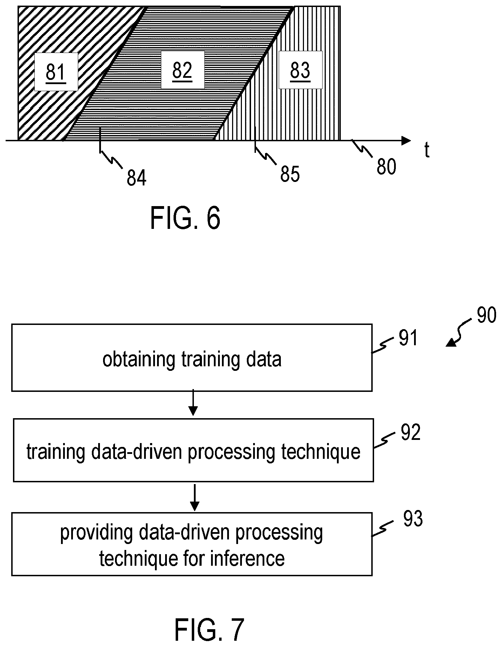

Fig. 6 schematically illustrates primary operation reserve 81, secondary operation reserve 82, and tertiary operation reserve 83 for an electric power system, respectively as a function of time at which they must be available and over which the must be available. The time is illustrates along a time axis 80. The secondary operation reserve 82 must be available after, e.g., a time 84 that may be 5 minutes, and until a time 85 that may be 15 minutes after energy shortfall. The techniques disclosed herein are particularly suitable for (but not limited to) a short- or mid-term ahead re-dispatch over a time horizon that is at least 1 minute and at most 1 day, that is at least 5 minutes and at most 2 hours, or that is at least 5 minutes and at most 1 hour.

Fig. 7 is a flow chart of a method 90 of providing the data-driven processing technique 52. The method 90 may be performed by the processing system 40 and/or a computing system separate from the processing system 40. The training may be performed for a specific electric power system topology and/or configuration. Thus, for electric power systems having different electric power system topologies and/or configurations, different data-driven processing techniques 52 may be trained for use during inference.

At process block 91, training data are obtained. The training data may comprise historical settings and associated operation costs (e.g., operation powers) and/or safety levels. The training data may comprise results of dynamic system simulations of the electric power system.

At process block 92, the data-driven processing technique is trained. The training may be implemented with the objective of the data-driven processing technique adjusting the OPF processing so as to minimize the cost function of the OPF processing while maintaining a desired security level. The training may, thus, comprise using the output of the data-driven processing technique as obtained in a training step to respectively adapt the OPF processing and determining the optimal cost function determined by the OPF processing as respectively adapted by the data-driven processing technique.

At process block 93, the data-driven processing technique is provided for use by the processing system 40 during inference. This may comprise transmitting parameters, optionally also hyperparameters, of the data-driven processing technique as trained at process block 92 to the processing system 40 for use during inference.

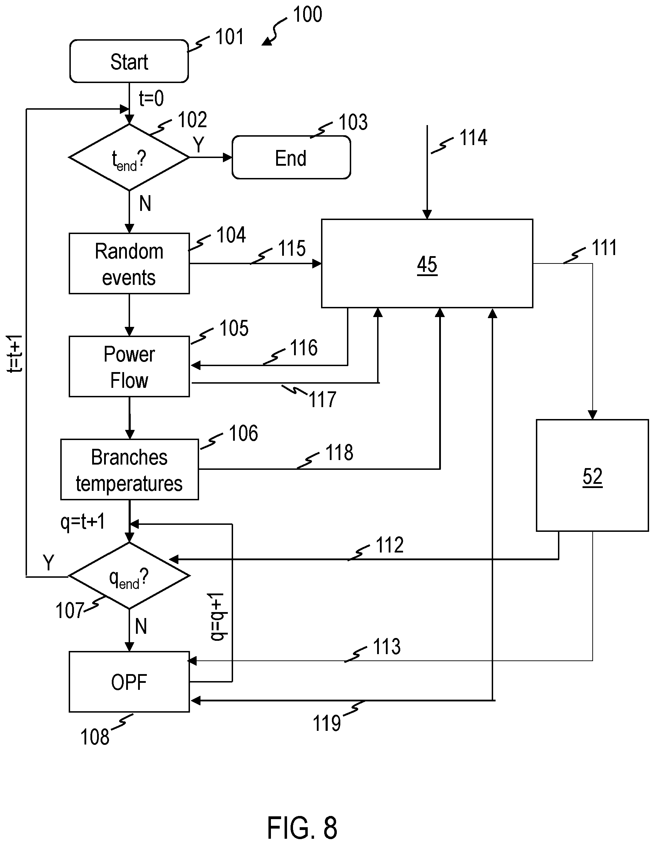

Fig. 8 shows a flow chart of a method 100 of determining operating settings. Fig. 8 also shows data input and output for various method steps, for a lookup table 45 stored in the storage system 44 or another data repository, and for the data-driven processing technique 52. The method 100 may be performed automatically by the processing system 40 or by the system 10 comprising the processing system 40.

The method 100 comprises two loop flows are implemented to account for the operations of the TSOs due to possible contingences and/or deviations from the provisional scenario (e.g. forecast errors) described in the lookup table 45.

The main flow starts at t equal zero (process block 101) and ends at t equal t_{end} (process block 103, with decision block 102 checking whether the time t equal t_{end} was reached). If no random event takes place the information stored in the lookup table 45 are the same calculated by the power flow and temperature estimator blocks 105, 106. If at a certain t equal tᵢ, with tᵢ < t_{end}, a random event happens (process block 104), the power flow results and the branch temperatures deviate from the provisional data stored in the lookup table 45. In this case, the provisional data stored in the lookup table 45 are updated with the new and corrected data 117, 118 calculated by the power flow and temperature estimator blocks 105, 106.

Because of the considered random event (block 104), the secondary and tertiary reserve may need to be re-planned. Therefore the block diagram 100 foresees a second loop flow 107, 108 where the OPF processing 108 is executed. This second loop flow 107, 108 starts at "q" equal "tᵢ+1" and ends at "q" equal q_{end}.

The data-driven processing technique 52 obtains its input 111 based on, at least, the data stored in the lookup table 45. The data-driven processing technique 52 provides the time horizon 112 that defines q_{end}. The data-driven processing technique 52 provides OPF constraints 113 to be considered in the OPF processing 108.

The role of the data-driven processing technique 52 is to define dynamically the optimal power flow constraints as well as the "q_{end}" with the aim of minimizing the overall costs for short term operations maintaining at the same time an acceptable (e.g., constant) risk level in the electric power system.

The lookup table 45 may also receive and/or store therein data 114 specifying generation dispatch, load forecast, scheduled outages. The lookup table 45 may receive and/or store therein data 115 relating to a random (i.e., not pre-planned) event, with the data 115 comprising, e.g., equipment status (ON/OFF), forecast errors (load, RES), or other data 115. The lookup table 45 may provide data 116 specifying a network status to the power flow block 105. The lookup table 45 may receive data 47 comprising state variables, such as voltages (optionally including voltage magnitudes and voltage phases) from the power flow block 105. The lookup table 45 may receive temperature estimates for branches, such as overhead lines or cables, from the branch temperature block 106. The lookup table 45 may provide data 119 comprising generator availabilities, unit commitment, and/or dispatch data to the optimal power flow processing 108.

A structure as generally shown in Fig. 8 may be used not only during inference but also during training. In this case, the random events are provided by a random event generator.

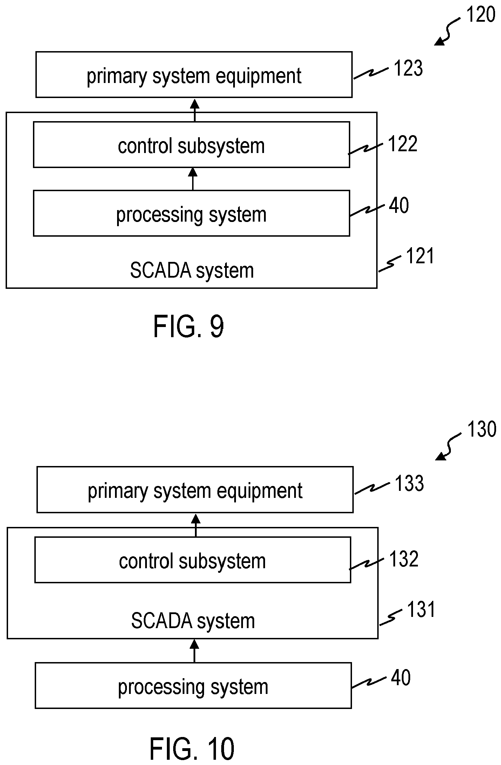

Fig. 9 shows a schematic representation of an electric power system 120 according to an embodiment. The electric power system 120 comprises primary system equipment 123 and a SCADA system 121. The SCADA system 121 comprises the processing system 40 and a SCADA control subsystem 122 communicatively interfaced with the processing system 40. The SCADA control subsystem 122 is operative to implement an ahead re-dispatch in accordance with the settings determined by the processing system 40.

Fig. 10 shows a schematic representation of an electric power system 130 according to an embodiment. The electric power system 130 comprises primary system equipment 133 and a SCADA system 131. The SCADA system 131 comprises a SCADA control subsystem 132. The SCADA system 131 is communicatively interfaced with the processing system 40. The SCADA control subsystem 132 is operative to is operative to implement an ahead re-dispatch in accordance with the settings determined by the processing system 40.

Various effects and advantages are attained by the processing system, method, and system according to embodiments. The processing system and method provide enhanced techniques for an electric power system re-dispatch. The processing system and method allow optimal operation settings to be attained that minimize the OPF cost function. The processing system and method are particularly suitable for short-term or mid-term ahead re-dispatch and/or for replanning secondary and/or tertiary operation reserve(s), without being limited thereto.

In various embodiments, the processing system and method are operative for one, several, or all of: reducing re-dispatch costs changing dynamically the constraints of the OPF processing; maintaining an acceptable, constant risk level in the system by dynamically changing the constrains given to the OPF; maintaining an acceptable, constant risk level in the system by selecting a minimum time span for the ahead re-dispatch; maintaining an acceptable, constant risk level in the system by selecting a minimum spinning reserve.

Embodiments may be used in association with a power grid having renewables penetration, such as power grid comprising renewable energy systems (such as DERs), and/or HVDC systems, without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures, and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method of determining settings for electric power system operation, the method comprising:
determining, by the at least one processing system (40), parameters (74, 75; 112, 113) of an optimal power flow, OPF, processing (51; 108) for a re-dispatch of an electric power system (20), the parameters (74, 75; 112, 113) comprising at least one of OPF constraints (75; 113) and a time horizon (74; 112) of the OPF processing (51; 108), wherein determining the parameters (74, 75; 112, 113) comprises using a data-driven processing technique (52) to determine the parameters (74, 75; 112, 113); and
performing, by the at least one processing system (40), the OPF processing (51; 108) for the re-dispatch of the electric power system (20).

2. The method of claim 1, wherein the data-driven processing technique (52) has an input (71) that receives operational data (47, 48), the operational data (47) comprising operational data of the electric power system (20) from a previous re-dispatch.

3. The method of claim 2, wherein the operational data (47, 48) further comprises data (48) dependent on an event that causes the re-dispatch to be performed.

4. The method of claim 2 or claim 3, wherein the operational data (47, 48) are retrieved from a data repository (44; 45), wherein the method further comprises updating, by the at least one processing system (40), data stored in the data repository (44; 45) responsive to the re-dispatch.

5. The method of any one of the preceding claims, wherein the data-driven processing technique (52) determines both the OPF constraints (75; 113) and the time horizon (74; 112).

6. The method of any one of the preceding claims, wherein the data-driven processing technique (52) comprises an artificial intelligence, Al, model (52).

7. The method of claim 6, wherein the AI model (52) is a machine learning, ML, model (52) that is trained with an objective of minimizing re-dispatch costs while ensuring a pre-determined security level.

8. The method of any one of the preceding claims, wherein the OPF processing (51; 108) is a non-security-constrained OPF processing (51; 108).

9. The method of any one of the preceding claims, wherein the OPF processing (51; 108) is performed to adapt a secondary operation reserve (82) and/or a tertiary operation reserve (83) of the electric power system operation.

10. The method of any one of the preceding claims, further comprising verifying, by the at least one processing system (40), that an OPF trigger criterion is fulfilled and initiating the OPF processing (51; 108) responsive to the OPF trigger criterion.

11. The method of claim 10, wherein
the electric power system (20) comprises branches, and wherein the trigger criterion is based on branch temperatures of the branches of the electric power system (20); and/or
the method further comprises performing, by the at least one processing system (40), a power flow, PF, processing (53; 105), wherein the trigger criterion is based on results of the PF processing (53; 105).

12. The method of any one of the preceding claims, further comprising initiating or enabling, by the processing system (40), the re-dispatch in accordance with OPF processing (51; 108) results of the OPF processing (51; 108).

13. The method of any one of the preceding claims, wherein the method determines the settings for a short term re-dispatch, the short term (84, 85) being at least one minute and less than one day.

14. Machine-readable instruction code which, upon execution by at least one processing circuit (43), causes the at least one processing circuit (43) to perform the method of any one of the preceding claims.

15. A processing system (40) for determining settings for electric power system operation, the processing system (40) comprising at least one processing circuit operative to:
determine parameters (74, 75; 112, 113) of an optimal power flow, OPF, processing (51; 108) for a re-dispatch of an electric power system (20), the parameters (74, 75; 112, 113) comprising at least one of OPF constraints (75; 113) and a time horizon (74; 112) of the OPF processing (51; 108), the at least one processing circuit being operative to apply a data-driven processing technique (52) to determine the parameters (74, 75; 112, 113); and
perform the OPF processing (51; 108) for the re-dispatch of the electric power system (20).
